# EUROPÄISCHE PATENTSCHRIFT

(11) **EP 1 020 737 B1**
(45) Veröffentlichungstag und Bekanntmachung des Hinweises auf die Patenterteilung: **03.11.2004**
(21) Anmeldenummer: 99124408.8
(22) Anmeldetag: 07.12.1999
(51) Int. Cl.: G01V 3/10

(54) **Verfahren und Vorrichtung zur elektromagnetischen Detektion von Objekten**
Method and apparatus for electromagnetic detection of objects
Procédé et dispositif pour la détection électromagnétique des objets

(30) Priorität: 14.01.1999 DE 19901174
(43) Veröffentlichungstag der Anmeldung: 19.07.2000
(73) Patentinhaber: Ebinger, Klaus, D-51149 Köln (DE)
(72) Erfinder: Ebinger, Klaus, 51143 Köln (DE)
(74) Vertreter: Heim, Hans-Karl, Dipl.-Ing.

(56) Entgegenhaltungen:
- EP-A- 0 729 039
- DE-A- 4 212 363
- US-A- 4 325 027
- US-A- 4 486 712
- US-A- 5 414 411

## Beschreibung

Die Erfindung betrifft ein Verfahren zur elektromagnetischen Detektion von Objekten mit einem Detektor, bei dem Einzelimpulse ausgestrahlt werden, die das zu detektierende Objekt zur Abstrahlung von Sekundärsignalen anregen, die Sekundärsignale empfangen werden, das Abklingverhalten der Sekundärsignale ausgewertet wird und ein von der Intentsität und dem Abklingverhalten der Sekundärsignale abhängiges Anzeigesignal ausgegeben wird.

Die Erfindung betrifft ferner eine Vorrichtung zur elektromagnetischen Detektion von Objekten mit einem Detektor, mit einem Pulserzeuger, einer Sendeeinrichtung zum Ausstrahlen von Einzelimpulsen, einer Empfangseinrichtung zum Empfangen von Sekundärsignalen und einer Sample- und Hold-Einrichtung zum Erzeugen von Abtastsignalen der Sekundärsignale.

Ein gattungsgemäßes Verfahren sowie eine gattungsgemäße Vorrichtung sind aus der DE 195 06 339 C2 bekannt. Danach wird einerseits durch die Aussendung von Einzelimpulsen, den nachfolgenden Empfang von Sekundärimpulsen eines zu detektierenden Objektes und die Bestimmung einer von der Intensität des Sekundärsignals abhängigen Größe der prinzipielle Nachweis für das Vorhandensein eines Objektes erbracht; der Betrag dieses nachgewiesenen Intensitätssignals ist ferner ein Maß für die Objektgröße und/oder den Abstand des Objektes zum Detektor. Zum anderen wird bei der gattungsgemäßen Vorrichtung das zeitliche Verhalten des Sekundärsignals erfaßt. Dies hat den Hintergrund, daß das Abklingverhalten des Sekundärsignals objektabhängig ist. Insbesondere hängt das Abklingverhalten vom Material des Objektes ab. Das Erfassen des Abklingverhaltens bietet somit die Möglichkeit einer Objekt- bzw. Materialidentifikation. Dabei bieten sich das gattungsgemäße Verfahren sowie die entsprechende Vorrichtung besonders gut für die Unterscheidung zwischen ferromagnetischen und nicht ferromagnetischen Objekten an. Das intensitätsabhängige Signal sowie das die Abklingzeit kennzeichnende Signal werden bei der gattungsgemäßen Vorrichtung Anzeigeeinrichtungen zugeführt, welche die Signale zum einen optisch und zum anderen voneinander unabhängig anzeigen.

Diese an sich gut funktionierende Vorrichtung sowie das entsprechende Verfahren sind im Hinblick auf die Anwenderfreundlichkeit und ebenfalls im Hinblick auf die Aussagekraft der Anzeigesignale verbesserungsfähig. Je nach den gegebenen Umständen, beispielsweise bei der Verwendung der Vorrichtung bzw. bei der Ausübung des Verfahrens bei Dunkelheit oder unter Wasser, ist es unerwünscht, auf optische Anzeigeelemente angewiesen zu sein. Ferner soll der Anwender ohne besondere Anforderungen an seine Konzentration und seine Kombinationsfähigkeit ein auf intuitiver Basis aussagekräftiges Anzeigesignal erhalten.

Die DE 42 12 363 C2 beschreibt einen Metalldetektor, bei welchem die optische Anzeigeeinrichtung der Objektidentifikation dient, während die eigentliche Objektdetektion, d.h. der Nachweis, daß überhaupt ein Objekt vorhanden ist, über eine akustische Anzeige vermittelt wird. Allerdings ist bei dem genannten Metalldetektor der Anwender nach wie vor auf die visuelle Beobachtung eines Anzeigesignals angewesen; ferner bedient sich der angesprochene Metalldetektors eines grundlegenden anderen Detektionsprinzips: im Gegensatz zur gattungsgemäßen Vorrichtung und dem entsprechenden Verfahren wird nicht ein Impulsverfahren (PI-Schaltung), sondern ein sogenanntes Sinus-Verfahren verwendet.

Der Erfindung liegt die Aufgabe zugrunde, das gattungsgemäße Verfahren sowie die gattungsgemäße Vorrichtung zu verbessern und insbesondere das Anzeigesignal in bequemer Weise zu vermitteln sowie leicht interpretierbar und aussagekräftig zu gestalten.

Diese Aufgabe wird mit den Merkmalen der unabhängigen Patentansprüche 1 und 8 gelöst.

Die Erfindung baut auf dem gattungsgemäßen **Verfahren** dadurch auf, daß ein akustisches Anzeigesignal verwendet wird, daß eine erste akustische Charakteristik des Anzeigesignals von der Intensität der Sekundärsignale abhängt und daß eine zweite akustische Charakteristik des Anzeigesignals von dem Abklingverhalten der Sekundärsignale abhängt. Ein besonderer Vorteil dieses Verfahrens besteht darin, daß das Anzeigesignal ausschließlich auf akustischer Basis vermittelbar ist. Damit kann der Anwender das Verfahren unter praktisch allen Umständen anwenden, insbesondere bei schlechten Lichtverhältnissen oder sogar unter Wasser. Die Maßnahme, daß dem Anzeigesignal zwei verschiedene akustische Charakteristiken - oder mit anderen Worten: akustische Variationsmöglichkeiten - vermittelt werden, bietet den Vorteil, daß neben der bloßen Objektdetektion, d.h. dem Nachweis, daß überhaupt ein Objekt vorhanden ist, zusätzlich eine Identifiktion der Objekteigenschaften, d.h. insbesondere eine Unterscheidung zwischen ferromagnetischen und nicht ferromagnetischen Objekten, verwirklicht werden kann. Da die beiden akustischen Charakteristika in einem einzigen Anzeigesignal vereinigt sind, erfolgt die Interpretation des Signals einheitlich und somit vorwiegend auf einer intuitiven Basis. Dies macht die Arbeit auf der Grundlage des erfindungsgemäßen Verfahrens bequemer und weitgehend ermüdungsfrei.

Besonders vorteilhaft ist es, wenn die erste akustische Charakteristik die Frequenz des Anzeigesignals ist. Dies ist eine besonders eingängige Variante der Anzeigecharakteristik.

In diesem Zusammenhang wird bevorzugt, daß die Frequenz des Anzeigesignals mit zunehmender Intensität des Sekundärsignals ansteigt. Ein sich näherndes Objekt bewirkt somit eine ansteigende Frequenz. An diesen Zusammenhang ist der Anwender durch die Benutzung zahlreicher anderer Nachweisgeräte gewöhnt. Inbesondere bei der Minensuche bedeutet der Frequenzantstieg "Gefahr".

Vorzugsweise ist die zweite akustische Charakteristik die Frequenz einer periodischen Amplitudenmodulation des Anzeigesignals. Eine Amplitudenmodulation läßt die intensitätsabhängige Frequenz des Anzeigesignals unbeeinflußt und kann somit ideal als zweiter Anzeigeparameter verwendet werden. Man hat folglich ein einziges Anzeigesignal, welches über einen einzigen Wahrnehmungskanal des Menschen aufgenommen wird, das andererseits aber "zweidimensional" ist und somit einen sehr großen Informationsinhalt trägt.

Bevorzugt wird die Intensität eines Sekundärsignals durch Integration ermittelt, wodurch ein intensitätsabhängiges Spannungssignal entsteht. Dieses Verfahren bietet sich an, da das Integral des Sekundärsignals über einen ausgewählten Zeitabschnitt ein gutes Maß für die Gesamtintensität darstellt.

Bevorzugt wird das Spannungssignal einem Spannungs-Frequenz-Wandler als Eingangssignal zugeführt. Durch diese Maßnahme wird auf einfache Weise aus der Spannung das erwünschte Frequenzsignal erstellt.

Es ist vorteilhaft, wenn das Abklingverhalten eines Sekundärsignals durch mindestens zwei Abtastsignale, welche zu mindestens zwei Sampling-Zeiten erzeugt werden, ausgewertet wird. Durch ein solches lokales Abtasten der Abklingkurve wird eine für die meisten Anwendungen ausreichende Erfassung des Abklingverhaltens bereitgestellt.

Dabei ist es besonders nützlich, wenn die mindestens zwei Abtastsignale einem Differenzverstärker zugeführt werden und ein von dem Ausgangssignal des Differenzverstärkers abhängiges Modulationssignal erzeugt wird. Man erreicht so ein Modulationssignal, welches sowohl von der Steilheit als auch von der absoluten Intensität des Sekundärsignals abhängt.

Es kann auch vorteilhaft sein, wenn mehrere Abtastsignale erzeugt werden, diese in vorgegebener Weise zu mindestens zwei Summen aufaddiert werden und die Summen dem Differenzverstärker zugeführt werden. Auf diese Weise lassen sich die Abtastbereiche der Sekundärsignale besonders leicht modifizieren und variieren, was die Anpassungsfähigkeit des Verfahrens verbessert.

Vorzugsweise wird das Modulationssignal dem Spannungs-Frequenz-Wandler zur Modulation des Anzeigesignals zugeführt. Die Ausgabe des Spannungs-Frequenz-Wandlers kann somit das erwünschte "zweidimensionale" akustische Signal zur Verfügung stellen.

Bevorzugt wird die Frequenz des Anzeigesignals in einem Wertebereich zwischen 0 und 3 kHz verändert. Auf diese Weise wird das gesamte akustische Frequenzspektrum des Menschen ausgenutzt.

Besonders vorteilhaft ist es, wenn sich bei Annhäherung des Detektors an das Objekt sowohl die Frequenz des Anzeigesignals auch auch die Frequenz der Modulation erhöhen. Durch diese Maßnahme liegen sich unterstützende Charakteristika vor, was insbesondere im Hinblick auf die Warnung vor einer Gefahr im Zusammenhang mit etwa der Minensuche zu bevorzugen ist.

Es kann auch nützlich sein, wenn in dem Fall, in dem die Frequenz des Anzeigesignals einen Maximalwert annimmt, sich die Frequenz der Modulation bei weiterer Annäherung des Detektors an das Objekt weiter erhöht. Somit kann selbst bei einer Sättigung der Spannungs-Frequenz-Wandlung eine weitere Annäherung des Detektors an das Objekt nachgewiesen werden.

Ferner hat sich eine andere Verfahrensvariante als gegebenenfalls vorteilhaft erwiesen, welche unter anderem dadurch gekennzeichnet ist, daß die erste akustische Charakteristik die Lautstärke des Anzeigesignals ist. Ein sich Annähern an das zu detektierende Objekt wird somit durch eine Erhöhung der Lautstärke und folglich in sehr eingängiger Weise quittiert.

In diesem Zusammenhang ist es besonders vorteilhaft, wenn die Lautstärke des Anzeigesignals mit zunehmender Intensität des Sekundärsignals zunimmt. Besonders bei der Minensuche ist diese Zuordnung vorteilhaft, da ein lautes Signal "Gefahr" anzeigt.

Wird die Lautstärke des Anzeigesignals als erste akustische Charakteristik verwendet, so wird dies vorzugsweise durch die Maßnahme erreicht, daß das Spannungssignal, welches am Ausgang des Integrators anliegt, einem amplitudengesteuerten Anzeigesystem zugeführt wird. Durch diese Maßnahme wird das Spannungssignal in einfacher Weise in ein Anzeigesignal mit spannungabhängiger Lautstärke transformiert.

Ferner ist es vorteilhaft, wenn das Modulationssignal dem amplitudengesteuerten Anzeigesystem zur Modulation des Anzeigesignals zugeführt wird. Die Ausgabe des amplitudengesteuerten Anzeigesystems kann somit, ebenso wie bei der auf der Frequenz basierenden Anzeige, das erwünschte "zweidimensionale" akustische Signal zur Verfügung stellen.

Besonders vorteilhaft ist die auf der Lautstärke basierende Verfahrensvariante, wenn sich bei Annäherung des Detektors an das Objekt sowohl die Lautstärke des Anzeigesignals als auch die Frequenz der Modulation erhöhen. Durch diese Maßnahme liegen sich unterstützende Charakteristika vor, was insbesondere im Hinblick auf die Warnung vor einer Gefahr im Zusammenhang mit etwa der Minensuche zu bevorzugen ist.

Es kann auch nützlich sein, wenn in dem Fall, in dem die Lautstärke des Anzeigesignals einen Maximalwert annimmt, sich die Frequenz der Modulation bei weiterer Annäherung des Detektors an das Objekt weiter erhöht. Somit kann selbst bei einer Sättigung des amplitudengesteuerten Anzeigesystems eine weitere Annäherung des Detektors an das Objekt nachgewiesen werden.

Das Verfahren kann weiterhin dadurch vorteilhaft ausgestaltet werden, daß zusätzlich zur ersten und/oder zweiten akustischen Charakteristik entsprechende optische Anzeigesignale verwendet werden.

Die Erfindung baut auf der gattungsgemäßen **Vorrichtung** dadurch auf, daß eine Anzeigesignal-Erzeugungseinrichtung zum Erzeugen eines in seiner Charakteristik von der Intensität der Sekundärssignale abhängigen akustischen Anzeigesignals, ein Modulator zum Erzeugen eines vom Abklingverhalten der Sekundärsignale abhängigen Modulationssignals, wobei das Modulationssignal zur Amplitudenmodulation des akustischen Anzeigesignals der Anzeigesignal-Erzeugungseinrichtung eingebbar ist, und ein Signalgeber zum Ausgeben des akustischen Anzeigesignals vorgesehen sind. Mit dieser Vorrichtung lassen sich die Vorteile des erfindungsgemäßen Verfahrens erzielen.

Vorzugsweise handelt es sich bei der Anzeigesignal-Erzeugungseinrichtung um einen Spannungs-Frequenz-Wandler zum Wandeln einer von der Intensität der Sekundärsignale abhängigen Spannung in einer Frequenz des akustischen Anzeigesignals. Auf diese Weise kann die Tonfrequenz des akustischen Anzeigesignals in vorteilhafter Weise als erste akustische Charakteristik verwendet werden.

Bezüglich einer anderen Ausführungsform der Erfindung ist es vorteilhaft, wenn die Anzeigesignal-Erzeugungseinrichtung ein amplitudengesteuertes Anzeigesystem zur Ausgabe eines Signals mit einer spannungsabhängigen Lautstärke ist. Je nach den äußeren Begebenheiten, etwa bei Nebengeräuschen, die in einem bestimmten Frequenzbereich liegen, kann diese Ausführungsform eine zuverlässige Variante der Erfindung darstellen.

Bevorzugt sind Sende- und Empfangseinrichtungen in einer Spule zusammengefaßt. Diese Ausgestaltung der Vorrichtung dient der Vereinfachung und läßt weiterhin die Verwendung gängiger Schaltungstechniken zu.

Weiter weist die Sample- und Hold-Einrichtung bevorzugt mindestens zwei Sampling-Zeitgeber und mindestens zwei Sampling-Zeitschalter auf, die jeweils von den Sampling-Zeitgebern angesteuert werden. Auf diese Weise ist es möglich, die Abklingkurve der Sekundärsignale in vorgegebenen Zeitabschnitten abzutasten.

Besonders vorteilhaft ist es, wenn mindestens ein Integrator zum Integrieren mindestens eines Abtastsignals vorgesehen ist. Hierdurch läßt sich ein Intensitätssignal erzeugen, welches mit der Gesamtintensität des Sekundärsignals stark korreliert ist.

Bevorzugt ist mindestens ein Differenzverstärker zum Bilden der Differenz aus mindestens zwei Abtastsignalen vorgesehen. Eine solche Differenz der Abtastsignale ist charakteristisch für sowohl die Abklingzeit des Sekundärsignals als auch für die Gesamtintensität.

Vorzugsweise ist die erfindungsgemäße Vorrichtung seewasserfest und als Unterwassergerät einsetzbar. Bei dem genannten Unterwassereinsatz und den damit verbundenen widrigen Umständen kommen die Vorteile der "zweidimensionalen" akustischen Anzeige besonders zum Tragen.

Ferner kann vorteilhaft sein, wenn der Modulator und/oder die Anzeigesignal-Erzeugungseinrichtung zusätzlich mit einer optischen Anzeigeeinrichtung gekoppelt sind. Diese ergänzende Maßnahme bringt einerseits eine höhere Bedienungssicherheit mit sich. Andererseits können Modulationseffekte, die über den Frequenzumfang der Tonumsetzung hinausgehen, besser erkannt werden.

Der Erfindung liegt die überraschende Erkenntnis zugrunde, daß eine akustische "Mischfunktion" zur Verfügung gestellt werden kann, die eine Signalvielfalt zuläßt, aufgrund welcher ein bequemes und zuverlässiges Arbeiten mit einem Detektor möglich ist. Insbesondere bei einiger Erfahrung, die insbesondere auf intuitiver Basis gesammelt wird, sind dezidierte Rückschlüsse auf Objektgröße, Entfernung zum Objekt und Material des Objektes möglich.

Die Erfindung wird nun mit Bezug auf die begleitenden Zeichnungen sowie anhand einer bevorzugten Ausführungsform beispielhaft erläutert.
- Fig. 1A: zeigt einen überlagerten Spannungs-Zeit-Verlauf für ein Objekt mit einem ersten Abklingverhalten;
- Fig. 1B: zeigt einen überlagerten Spannungs-Zeit-Verlauf für ein Objekt mit einem zweiten Abklingverhalten;
- Fig. 2: zeigt einen Spannungs-Frequenz-Verlauf eines Spannungs-Frequenz-Wandlers;
- Fig. 3: zeigt das Blockschaltbild einer Schaltung zur Verwendung in einer erfindungsgemäßen Vorrichtung; und
- Fig. 4: stellt verschiedene Signalformen graphisch dar.

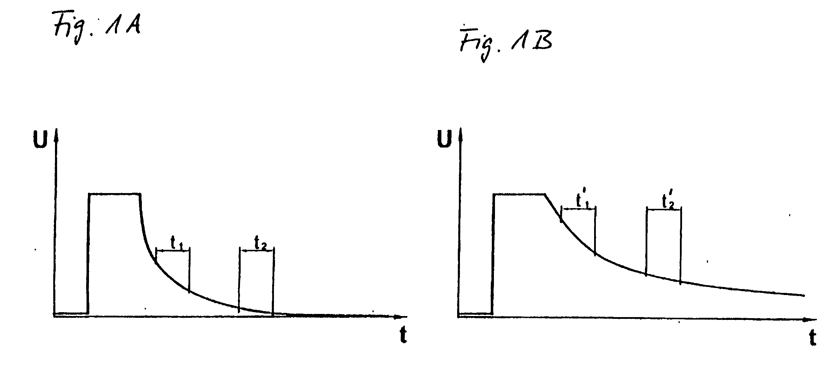

Die Figuren 1A und 1B zeigen jeweils Spannungs-Zeit-Verläufe für Objekte mit unterschiedlichem Abklingverhalten.

In Fig. 1A ist der Spannungs-Zeit-Verlauf für ein Objekt mit einer rasch abfallenden Abklingfunktion dargestellt. Folglich kann es sich bei diesem Beispiel um eine Abklingfunktion eines ferromagnetischen Objektes handeln. Der dargestellte Spannungs-Zeit-Verlauf zeigt bei kleinen Zeiten zunächst den abgestrahlten Einzelimpuls, während dieser zu größeren Zeiten hin von dem Sekundärsignal, welches von dem nachzuweisenden Objekt abgestrahlt wird, überlagert ist. Dieser abfallende Abschnitt der Abklingfunktion ist charakteristisch für das zu detektierende Objekt.

Fig. 1B ist damit vergleichbar, nur daß hier ein Sekundärsignal mit flacherer Abklingfunktion überlagert ist. Beispielsweise könnte es sich um die Abklingfunktion eines nicht ferromagnetischen Materials handeln.

In den Figuren 1A und 1B sind Zeitintervalle eingezeichnet, welche jeweils Sampling-Zeiten t₁, t₂, t₁', t₂' entsprechen. Zu diesen Sampling-Zeiten werden die jeweiligen Signalverläufe abgetastet; hieraus werden die für den Nachweis und die Identifikation erforderlichen Informationen gezogen. Beispielsweise kann durch Integration der Signalverläufe während des Zeitraums t₁ bzw. t₁' Information über die Signalintensität und damit über die Objektgröße bzw. über den Abstand des Detektors zum Objekt erhalten werden. Durch den Vergleich der Abtastwerte t₁ mit t₂ bzw. t₁' mit t₂' erhält man Informationen über das Abklingverhalten der Sekundärsignale und somit Aufschluß über die Objektbeschaffenheit. Eine große Differenz zwischen den Abtastwerten bei t₁ und t₂ läßt auf ein rasches Abklingen des Sekundärsignals schließen, während eine geringe Differenz zwischen den Abtastwerten t₁' und t₂' ein langsames Abklingen des Sekundärsignals anzeigt.

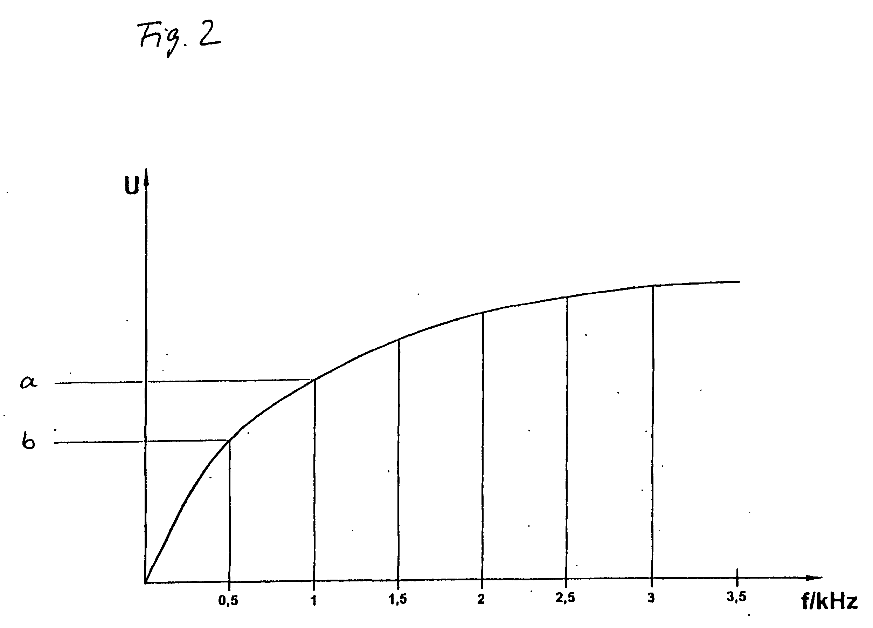

Figur 2 zeigt den Spannungs-Frequenz-Verlauf eines Spannungs-Frequenz-Wandlers (VCO; voltage controlled oscillator). Die auf der Ordinate aufgetragene Spannung U ist vorzugsweise die von einem Integrator 16 abgegebene, von der Intensität des Sekundärsignals abhängige Spannung. Man erkennt, daß mit zunehmender Spannung die Frequenz f ausgehend von 0 kHz bis etwa 3 kHz kontinuierlich ansteigt, um dann oberhalb von etwa 3 kHz ihren Sättigungswert anzunehmen. Folglich erhält man bei höherer Intensität des Sekundärsignals, d.h. höherer Integrationsspannung U, einen höheren Frequenzwert und somit eine akustische Information über die Objektgröße bzw. den Abstand des Objektes von dem Detektor. In die Graphik sind zwei exemplarische Wertepaare a, b eingezeichnet; je nach den gegebenen Umständen könnte eine Signalmodulation beispielsweise bei diesen Frequenzen einsetzen.

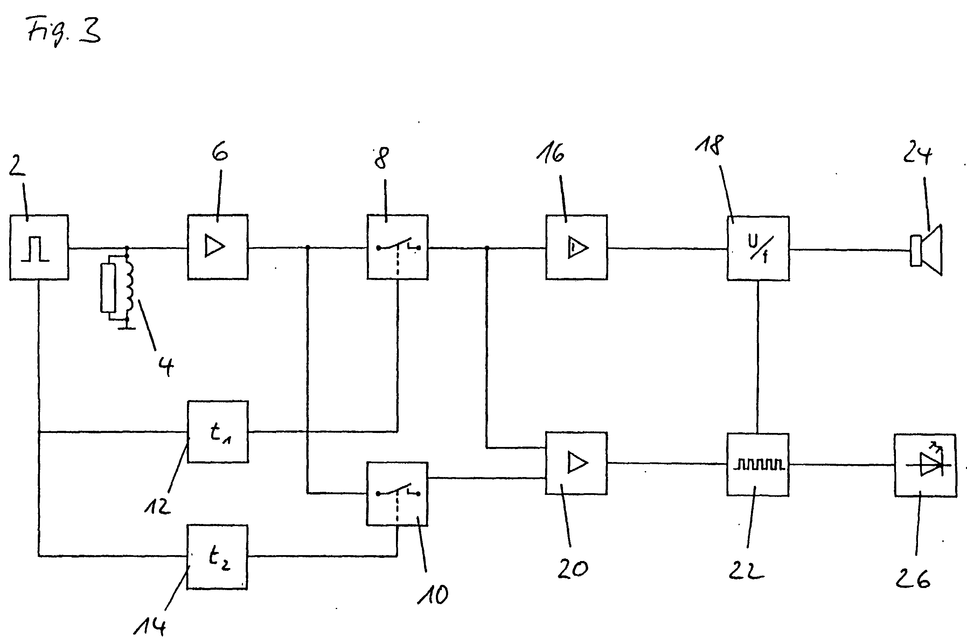

Figur 3 veranschaulicht die Funktionsweise einer bevorzugten Detektorschaltung anhand eines Blockschaltbildes.

Von einem Pulssender 2 wird über eine Sende- und Empfangsspule 4 ein Signal ausgestrahlt. Dieses abgestrahlte Signal erzeugt in einem zu detektierenden Objekt ein Sekundärsignal, welches sich durch die Vermittlung der Sende- und Empfangsspule 4 mit dem primär ausgesendeten Impuls überlagert.

Das überlagerte Signal wird über einen Verstärker 6, zwei voneinander getrennten Sampling-Zeit-Schaltern 8, 10 zugeführt. Abhängig von dem Abstrahlungszeitpunkt des Primärsignals durch den Pulssender 2 werden die Sampling-Zeit-Schalter 8, 10 unabhängig voneinander durch jeweils eine Sampling-Zeit-Aufbereitungs-Schaltung 12, 14 geschaltet. Durch den Einfluß der Sampling-Zeit-Aufbereitungs-Schaltung 12 wird der Sampling-Zeit-Schalter 8 geschaltet, so daß das Sekundärsignal während des Zeitraums t₁, t₁' (vgl. Fig. 1A, 1B) abgetastet wird. Entsprechend wird der Sampling-Zeit-Schalter 10 von der Sampling-Zeit-Aufbereitungs-Schaltung 14 während eines Zeitraums t₂, t₂' (vgl. Fig. 1A, 1B) geschaltet, so daß eine Abtastung des Sekundärsignals während eines entsprechenden Zeitraums erfolgt.

Das Ausgangssignal des Sampling-Zeit-Schalters 8 wird nun einerseits einem Integrator 16 zugeführt, welcher eine intensitätsabhängige Ausgangsspannung U liefert. Diese Ausgangsspannung U wird einem Spannungs-Frequenz-Wandler 18 zugeführt und entsprechend Fig. 2 in eine Frequenz umgesetzt.

Andererseits werden die Abtastwerte sowohl des Sampling-Zeit-Schalters 8 als auch des Sampling-Zeit-Schalters 10 den Eingängen eines Differenzverstärkers 20 zugeführt. Der Differenzverstärker 20 erzeugt eine von der Differenz der Abtastwerte und somit von dem Abklingverhalten des Sekundärsignals abhängige Ausgangsspannung. Diese wird einem Modulator 22 eingegeben.

Das von dem Modulator 22 erzeugte Modulationssignal wird neben der Integrationsspannung U aus dem Integrator 16 dem Spannungs-Frequenz-Wandler 18 eingegeben, so daß das spannungsabhängige Frequenzsignal amplitudenmoduliert wird.

Das Gesamtsignal des Spannungs-Frequenz-Wandlers 18 wird einem Signalgeber 24, etwa einem Lautsprecher, zugeführt, welcher daraufhin in erfindungsgemäßer Weise ein akustisches Anzeigesignal ausgibt.

Dieses Anzeigesignal hat zwei verschiedene akustische Charakeristika, nämlich die intensitätsabhängige Tonfrequenz sowie die von der Objektbeschaffenheit abhängige Modulationsfrequenz.

In der beschriebenen beispielhaften Ausführungsform ist der Modulator 22 zusätlich mit einem optischen Anzeigeelement 26 gekoppelt, so daß Modulationseffekte, die über den Frequenzumfang der Tonumsetzung hinausgehen, besser erkennbar sind.

Anhand von Fig. 2 wird die aufgrund der Erfindung zur Verfügung gestellte Signalvielfalt und der damit verbundene hohe Informationsgehalt des "zweidimensionalen Mischsignals" erläutert.

Liegt ein Objekt mit einem rasch abklingenden Sekundärsignal vor (vgl. Fig. 1A), so wird selbst bei einem geringen Abstand zwischen Detektor und Objekt und einer entsprechend großen Integrationsspannung U keine Modulation des akustischen Anzeigesignals erfolgen. Liegt jedoch ein Objekt mit einer nur langsam abfallenden Abklingfunktion vor (vgl. Fig. 1B), so wird die Differenz zwischen den Abtastwerten t₁', t₂' ab einer bestimmten Integrationsspannung U bzw. Tonfrequenz f in einem Bereich liegen, bei dem eine Modulation erfolgt. Je nach Objektbeschaffenheit kann die Modulation bei geringeren oder bei höheren Tonfrequenzen einsetzen.

Insgesamt erhält der Anwender demnach Informationen über den Abstand des Detektors zum Objekt und/oder die Objektgröße sowie über die Objektbeschaffenheit.

Die beiden prinzipiell unabhängigen Charakteristika des akustischen Anzeigesignals können sich überraschenderweise bei speziellen Gegebenheiten in ihrem Informationsgehalt unterstützen. Liegt beispielsweise die Situation vor, daß eine Modulation erst bei geringem Abstand zwischen Detektor und Objekt einsetzt, so befindet sich das Tonfrequenzssignal evuentuell bereits in der Sättigung, d.h. in einem Bereich von beispielsweise 3 kHz. Setzt nun die Modulation ein, so kann eine weitere Annäherung des Detektors durch die Änderung der Modulation bei konstanter Tonfrequenz nachgewiesen werden. Die Erfindung stellt somit nicht nur eine "zweidimensionale Mischfunktion" zum Objektnachweis und zur Objektidentifikation zur Verfügung, sondern sie erhöht weiterhin den dynamischen Bereich des Detektors.

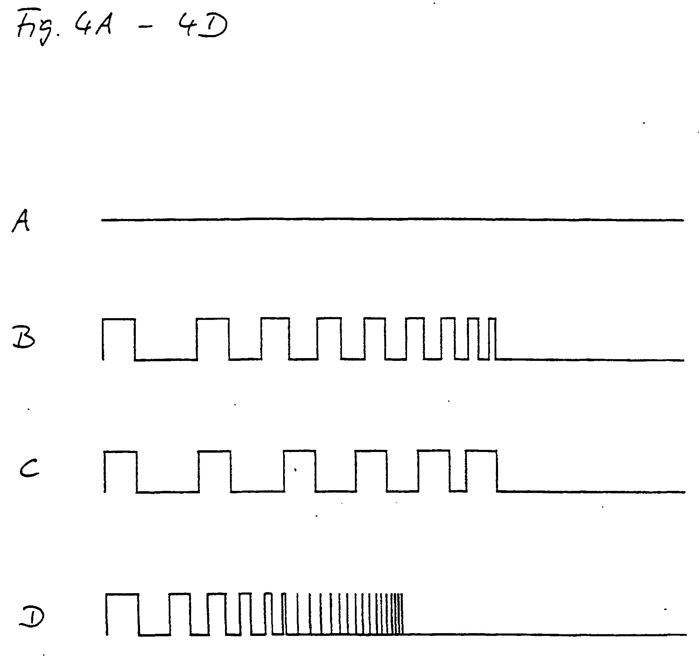

Zur weiteren Veranschaulichung des erfindungsgemäßen Systems werden in Fig. 4 vier beispielhafte Signalformen dargestellt.

Fig. 4A zeigt ein Signal ohne jegliche Modulation. Dies entsteht beispielsweise dann, wenn die von dem zu detektierenden Objekt abgestrahlten Sekundärsignale rasch abklingen und somit der Signalverlauf keinen oder einen nur geringen Intensitätsbeitrag während des Zeitraums t₂ (vgl. Fig. 1A) liefert.

Fig. 4B zeigt einen Signalverlauf, bei dem die Modulation mit geringer Frequenz anläuft und nachfolgend eine geringe Frequenzerhöhung aufweist.

Einen ähnlichen Verlauf zeigt Fig. 4C, während hier eine Frequenzerhöhung der Modulation in noch geringerem Maße vorliegt.

Hierzu im Gegensatz zeigt Fig. 4D einen Signalverlauf mit einer Modulation, deren Frequenz stark zunimmt.

Je nach den äußeren Begebenheiten sind praktisch beliebige Kombinationen der in Fig. 4 dargestellten Signalverläufe denkbar, was insbesondere dem erfahrenen Anwender zahlreiche Deutungsmöglichkeiten eröffnet.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

## Patentansprüche

1. Verfahren zur elektromagnetischen Detektion von Objekten mit einem Detektor, bei dem
- Einzelimpulse ausgestrahlt werden, die das zu detektierende Objekt zur Abstrahlung von Sekundärsignalen anregen,
- die Sekundärsignale empfangen werden,
- das Abklingverhalten der Sekundärsignale ausgewertet wird und
- ein von der Intensität und dem Abklingverhalten der Sekundärsignale abhängiges Anzeigesignal ausgegeben wird,
**dadurch gekennzeichnet,**
- **daß** ein akustisches Anzeigesignal verwendet wird,
- **daß** eine erste akustische Charakteristik des Anzeigesignals von der Intensität der Sekundärsignale abhängt und
- **daß** eine zweite akustische Charakteristik des Anzeigesignals von dem Abklingverhalten der Sekundärsignale abhängt.

2. Verfahren nach Anspruch 1,
**dadurch gekennzeichnet,**
- **daß** die erste akustische Charakteristik die Frequenz des Anzeigesignals ist und
- **daß** die zweite akustische Charakteristik die Frequenz einer periodischen Amplitudenmodulation des Anzeigesignals ist.

3. Verfahren nach Anspruch 2,
**dadurch gekennzeichnet,**
**daß** die Frequenz des Anzeigesignals mit zunehmender Intensität des Sekundärsignals in einem Wertebereich zwischen 0 und 3 kHz ansteigt.

4. Verfahren nach einem der vorhergehenden Ansprüche, **dadurch gekennzeichnet,**
- **daß** die Intensität eines Sekundärsignals durch Integration ermittelt wird, wodurch ein intensitätsabhängiges Spannungssignal (U) entsteht und dieses einem Spannungs-Frequenz-Wandler (18) als Eingangssignal zugeführt wird und
- **daß** das Modulationssignal dem Spannungs- Frequenz-Wandler (18) zur Modulation des Anzeigesignals zugeführt wird.

5. Verfahren nach einem der vorhergehenden Ansprüche, **dadurch gekennzeichnet,**
- **daß** das Abklingverhalten eines Sekundärsignals durch mindestens zwei Abtastsignale, welche zu mindestens zwei Sampling-Zeiten (t₁, t₂, t₁', t₂') erzeugt werden, ausgewertet wird und
- **daß** die mindestens zwei Abtastsignale einem Differenzverstärker (20) zugeführt werden und ein von dem Ausgangssignal des Differenzverstärkers (20) abhängiges Modulationssignal erzeugt wird.

6. Verfahren nach einem der vorhergehenden Ansprüche, **dadurch gekennzeichnet,**
- **daß** sich bei Annäherung des Detektors an das Objekt sowohl die Frequenz des Anzeigesignals als auch die Frequenz der Modulation erhöhen und
- **daß** die Frequenz des Anzeigesignals einen Maximalwert annimmt, während sich die Frequenz der Modulation bei weiterer Annäherung des Detektors an das Objekt weiter erhöht.

7. Verfahren nach einem der Ansprüche 1 oder 3 bis 5, **dadurch gekennzeichnet ,**
- **daß** die erste akustische Charakteristik die Lautstärke des Anzeigesignals ist und
- **daß** die Lautstärke des Anzeigesignals mit zunehmender Intensität des Sekundärsignals zunimmt.

8. Vorrichtung zur elektromagnetischen Detektion von Objekten mit einem Detektor, mit
- einem Pulserzeuger (2),
- einer Sendeeinrichtung (4) zum Ausstrahlen von Einzelimpulsen,
- einer Empfangseinrichtung (4) zum Empfangen von Sekundärsignalen und
- einer Sample- und Hold-Einrichtung (8, 10, 12, 14) zum Erzeugen von Abtastsignalen der Sekundärsignale,
**gekennzeichnet durch**
- eine Anzeigesignal-Erzeugungseinrichtung (18) zum Erzeugen eines in seiner Charakteristik von der Intensität der Sekundärsignale abhängigen akustischen Anzeigesignals,
- einen Modulator (22) zum Erzeugen eines vom Abklingverhalten der Sekundärsignale abhängigen Modulationssignals, wobei das Modulationssignal zur Amplitudenmodulation des akustischen Anzeigesignals der Anzeigesignal-Erzeugungseinrichtung (18) einggebbar ist, und
- einen Signalgeber (24) zum Ausgeben des akustischen Anzeigesignals.

9. Vorrichtung nach Anspruch 8,
**dadurch gekennzeichnet ,**
**daß** die Anzeigesignal-Erzeugungseinrichtung ein Spannung-Frequenz-Wandler (18) zum Wandeln einer von der Intensität der Sekundärsignale abhängigen Spannung (U) in eine Frequenz (f) des akustischen Anzeigesignals ist.

10. Vorrichtung nach Anspruch 8,
**dadurch gekennzeichnet ,**
**daß** die Anzeigesignal-Erzeugungseinrichtung ein amplitudengesteuertes Anzeigesystem zur Ausgabe eines Signals mit einer spannungsabhängigen Lautstärke ist.

11. Vorrichtung nach einem der Ansprüche 8 bis 10, **dadurch gekennzeichnet,**
**daß** Sende- und Empfangseinrichtung in einer Spule (4) zusammengefaßt sind.

12. Vorrichtung nach einem der Ansprüche 8 bis 11, **dadurch gekennzeichnet,**
**daß** die Sample- und Hold-Einrichtung mindestens zwei Sampling-Zeitgeber (12, 14) und mindestens zwei Sampling-Zeitschalter (8, 10) aufweist, die jeweils von den Sampling-Zeitgebern (12, 14) angesteuert werden.

13. Vorrichtung nach einem der Ansprüche 8 bis 12, **dadurch gekennzeichnet,**
- **daß** mindestens ein Integrator (16) zum Integrieren mindestens eines Abtastsignals vorgesehen ist und
- **daß** mindestens ein Differenzverstärker (20) zum Bilden der Differenz aus mindestens zwei Abtastsignalen vorgesehen ist.

## Claims

1. Method for the electromagnetic detection of objects with a detector, in which
- single pulses are transmitted, which excite the object to be detected to emit secondary signals,
- the secondary signals are received,
- the decay behaviour of the secondary signals is evaluated and
- an indicating signal dependent on the intensity and the decay behaviour of the secondary signals is outputted,
**characterized in that**
- an acoustic indicating signal is used,
- a first acoustic characteristic of the indicating signal is dependent on the intensity of the secondary signals and
- a second acoustic characteristic of the indicating signal is dependent on the decay behaviour of the secondary signals.

2. Method according to claim 1,
**characterized in that**
- the first acoustic characteristic is the frequency of the indicating signal and
- the second acoustic characteristic is the frequency of a periodic amplitude modulation of the indicating signal.

3. Method according to claim 2,
**characterized in**
**that** the frequency of the indicating signal rises with increasing intensity of the secondary signal in a value range between 0 and 3 kHz.

4. Method according to one of the preceding claims,
**characterized in that**
- the intensity of a secondary signal is determined by integration, so that an intensity-dependent voltage signal (U) is obtained and is supplied to a voltage-frequency converter (18) as input signal and
- the modulation signal is supplied to the voltage-frequency converter (18) for modulating the indicating signal.

5. Method according to one of the preceding claims,
**characterized in that**
- the decay behaviour of a secondary signal is evaluated by at least two sampling signals generated at at least two sampling times (t1, t2, t1', t2') and
- the at least two sampling signals are supplied to a differential amplifier (20) and a modulation signal dependent on the output signal of the differential amplifier (20) is generated.

6. Method according to one of the preceding claims,
**characterized in that**
- as the detector approaches the object, both the frequency of the indicating signal and the frequency of the modulation increase and
- the frequency of the indicating signal assumes a maximum value, whilst the frequency of the modulation increases further as the detector moves closer to the object.

7. Method according to one of the claims 1 or 3 to 5,
**characterized in that**
- the first acoustic characteristic is the sound volume of the indicating signal and
- the sound volume of the indicating signal increases with increasing intensity of the secondary signal.

8. Apparatus for the electromagnetic detection of objects with a detector, having
- a pulse generator (2),
- a transmitting device (4) for transmitting single pulses,
- a receiving device (4) for receiving secondary signals and
- a sample and hold device (8, 10, 12, 14) for generating sampling signals of the secondary signals,
**characterized by**
- an indicating signal generating device (18) for generating an acoustic indicating signal whose characteristic is dependent on the intensity of the secondary signals,
- a modulator (22) for generating a modulation signal dependent on the decay behaviour of the secondary signals, the modulation signal being inputtable for amplitude modulation of the acoustic indicating signal of the indicating signal generating device (18) and
- a signal generator (24) for outputting the acoustic indicating signal.

9. Apparatus according to claim 8,
**characterized in that**
the indicating signal generating device is a voltage-frequency converter (18) for converting a voltage (U) dependent on the intensity of the secondary signals into a frequency (f) of the acoustic indicating signal.

10. Apparatus according to claim 8,
**characterized in that**
the indicating signal generating device is an amplitude-controlled indicating system for outputting a signal with a voltage-dependent sound volume.

11. Apparatus according to one of the claims 8 to 10,
**characterized in**
**that** the transmitting and receiving device are combined in a coil (4).

12. Apparatus according to one of the claims 8 to 11,
**characterized in**
**that** the sample and hold device has at least two sampling timers (12, 14) and at least two sampling time switches (8, 10), which are each controlled by the sampling timers (12,

13. Apparatus according to one of the claims 8 to 12,
**characterized in that**
- at least one integrator (16) for integrating at least one sampling signal is provided and
- at least one differential amplifier (20) for forming the difference from at least two sampling signals is provided.

## Revendications

1. Procédé pour la détection électromagnétique d'objets avec un détecteur, selon lequel
- on émet des impulsions distinctes qui excitent l'objet à détecter pour lui faire émettre des signaux secondaires,
- on reçoit les signaux secondaires,
- on analyse le comportement d'amortissement des signaux se condaires, et
- on émet un signal indicateur en fonction de l'intensité et du comportement d'amortissement des signaux secondaires,
**caractérisé en ce qu'**
- on utilise un signal indicateur acoustique,
- une première caractéristique acoustique du signal indica teur dépend de l'intensité des signaux secondaires et
- une deuxième caractéristique acoustique du signal indica teur dépend du comportement d'amortissement des signaux secondaires.

2. Procédé selon la revendication 1,
**caractérisé en ce que**
- la première caractéristique acoustique est la fréquence du signal indicateur et
- la deuxième caractéristique acoustique est la fréquence d'une modulation d'amplitude périodique du signal indica teur.

3. Procédé selon la revendication 2,
**caractérisé en ce que**
la fréquence du signal indicateur augmente avec l'accroissement de l'intensité du signal secondaire dans un intervalle de valeurs compris entre 0 et 3 kHz.

4. Procédé selon une des revendications précédentes,
**caractérisé en ce que**
- l'intensité d'un signal secondaire est calculée par inté gration et, sous cet effet, on forme un signal de tension (U) fonction de l'intensité qui est transmis comme signal d'entrée à un convertisseur tension-fréquence (18), et
- le signal de modulation est transmis au convertisseur ten sion-fréquence (18) pour la modulation du signal indica teur.

5. Procédé selon une des revendications précédentes,
**caractérisé en ce que**
- le comportement d'amortissement d'un signal secondaire est analysé par au moins deux signaux de lecture produits à au moins deux temps d'échantillonnage (t₁, t₂, t₁', t₂'), et
- les au moins deux signaux de lecture sont transmis à un amplificateur différentiel (20) et un signal de modulation fonction du signal de sortie de l'amplificateur différen tiel (20) est produit.

6. Procédé selon une des revendications précédentes,
**caractérisé en ce que**
- lorsque le détecteur se rapproche de l'objet, la fréquence du signal indicateur et la fréquence de la modulation aug mentent, et
- la fréquence du signal indicateur prend une valeur maxi male tandis que la fréquence de modulation augmente encore lorsque le détecteur de se rapproche davantage de l'objet.

7. Procédé selon une des revendications 1 ou 3 à 5,
**caractérisé en ce que**
- la première caractéristique acoustique est l'intensité so nore du signal indicateur, et
- l'intensité sonore du signal indicateur croît avec l'accroissement de l'intensité du signal secondaire.

8. Dispositif pour la détection électromagnétique d'objets com prenant un détecteur qui comprend
- un générateur d'impulsions (2),
- un dispositif émetteur (4) servant à émettre des impul sions distinctes,
- un dispositif récepteur (4) destiné à recevoir des signaux secondaires et
- un dispositif d'échantillonnage-maintien (8, 10, 12, 14) destiné à produire des signaux de lecture des signaux se condaires,
**caractérisé par**
- un dispositif de production de signaux indicateurs (18) destiné à produire un signal indicateur acoustique dont la caractéristique est fonction de l'intensité des signaux secondaires,
- un modulateur (22) destiné à produire un signal de modula tion fonction du comportement d'amortissement des signaux secondaires, le signal de modulation destiné à la modula tion d'amplitude du signal indicateur acoustique pouvant être entré dans le dispositif de production de signaux in dicateurs (18), et
- un générateur de signaux (24) destiné à émettre en sortie le signal indicateur acoustique.

9. Dispositif selon la revendication 8,
**caractérisé en ce que**
le dispositif de production de signaux indicateurs est un convertisseur tension-fréquence (18) destiné à convertir une tension (U) qui est fonction de l'intensité des signaux se condaires, en une fréquence (f) du signal indicateur acous tique.

10. Dispositif selon la revendication 8,
**caractérisé en ce que**
le dispositif de production de signaux indicateurs est un système indicateur commandé en amplitude pour émettre en sortie un signal ayant une intensité sonore fonction de la tension.

11. Dispositif selon une des revendications 8 à 10,
**caractérisé en ce que**
le dispositif émetteur et le dispositif récepteur sont re groupés dans une bobine (4).

12. Dispositif selon une des revendications 8 à 11,
**caractérisé en ce que**
le dispositif d'échantillonnage-maintien présente au moins deux horloges d'échantillonnage (12, 14) et au moins deux minuteurs d'échantillonnage (8, 10) qui sont pilotés par les horloges d'échantillonnage (12, 14).

13. Dispositif selon une des revendications 8 à 12,
**caractérisé par**
- au moins un intégrateur (16) destiné à intégrer au moins un signal de lecture, et
- au moins un amplificateur différentiel (20) destiné à for mer la différence entre au moins deux signaux de lecture.
